# EUROPÄISCHE PATENTSCHRIFT

(11) **EP 2 005 117 B1**
(45) Veröffentlichungstag und Bekanntmachung des Hinweises auf die Patenterteilung: **07.05.2014**
(21) Anmeldenummer: 07723051.4
(22) Anmeldetag: 06.03.2007
(51) Int. Cl.: G01C 21/34, G08G 1/0969, H04L 29/08, G01C 21/36, G06Q 30/02

(54) **NAVIGATIONSANORDNUNG FÜR EIN KRAFTFAHRZEUG**
NAVIGATION ASSEMBLY FOR A MOTOR VEHICLE
SYSTÈME DE NAVIGATION DESTINÉ À UN VÉHICULE

(30) Priorität: 31.03.2006 US 395705; 22.05.2006 US 439315
(43) Veröffentlichungstag der Anmeldung: 24.12.2008
(73) Patentinhaber: Volkswagen Aktiengesellschaft, 38440 Wolfsburg (DE)
(72) Erfinder: NG, Brian, San Francisco California 94107 (US); ROSARIO, Daniel, Santa Cruz, CA 95060 (US); STOSCHEK, Arne, Palo Alto, CA 94303 (US); CHAN, Thomas, Mountain View, CA 94040 (US)
(86) Internationale Anmeldenummer: PCT/EP2007/001906
(87) Internationale Veröffentlichungsnummer: WO 2007/115616

(56) Entgegenhaltungen:
- EP-A- 1 168 286
- EP-A- 1 376 059
- JP-A- 2002 131 065
- JP-A- 2004 227 162
- US-A1- 2004 204 848

## Beschreibung

Die Erfindung betrifft eine Navigationsanordnung, ein Verfahren zum Betrieb einer Navigationsanordnung sowie ein Kraftfahrzeug zur Integration in eine Navigationsanordnung.

Die EP 0 875 730 B1 und die DE 698 15 940 T2 offenbaren ein Landkarteninformationsanzeigegerät zur Verwendung in einer Fahrzeugnavigationsvorrichtung mit einer Datenumsetzungseinrichtung zum Erfassen von Punkten von Kartendaten entsprechend einer Landkarte von einem Standpunkt durch eine Betrachtungslinie, die von dem Standpunkt ausgeht und bezüglich der Ebene der Landkarte einen Tiefenwinkel besitzt, und zum perspektivischen Projizieren der Punkte der Kartendaten auf eine Betrachtungsebene, die senkrecht zu der Betrachtungslinie festgelegt ist und einen vorgegebenen Abstand von dem Standpunkt besitzt, um Landkarten-Anzeigedaten zu erzeugen. Dabei wird eine Ansicht einer Umgebung aus der Vogelperspektive erzeugt. Ein Navigationssystem mit einer Ansicht einer Umgebung aus der Vogelperspektive ist zudem in der FR 2634707 sowie in der Zeitschrift autoconnect 2005, Vereinigte Motor-Verlage GmbH & Co. KG, Leuschnerstr. 1, 70174 Stuttgart, Deutschland, Seiten 18 und 21 offenbart.

Die EP 0 990 119 B1 offenbart eine digitale Personal-Kommunikationsvorrichtung mit einem Prozessor, mit einem Speicher, auf den der Prozessor zugreifen kann, und mit einer Anzeige, die mit dem Prozessor verbunden ist, wobei die Anzeige Karteninformationen und eine Position der digitalen Personal-Kommunikationsvorrichtung bezüglich der Karteninformation anzeigt, wobei die Karteninformation Wegpunkte, also Koordinaten enthält, wie vom Prozessor angewiesen. Die digitale Personal-Kommunikationsvorrichtung umfasst zudem eine Eingabeeinrichtung zum Bilden von Anfragen für Karteninformation und zum Auswählen von Wegpunkten und einen GPS-Empfänger, der mit dem Prozessor verbunden ist, wobei der Prozessor so programmiert ist, dass er Informationen, die er vom GPS-Empfänger erhält, so verarbeitet, dass daraus die Position der digitalen Personal-Kommunikationsvorrichtung bestimmt wird. Außerdem umfasst die digitale Personal-Kommunikationsvorrichtung einen Sender, der mit dem Prozessor verbunden ist, wobei der Prozessor so programmiert ist, dass er Karteninformation unter Verwendung des Senders von einem Kartenspeicher und einer Übertragungsvorrichtung anfordert, dass er die Karteninformation, die er vom Kartenspeicher und der Übertragungsvorrichtung erhalten hat, weiterverarbeitet, und dass er die Verfügbarkeit zusätzlicher gespeicherter Daten für Wegpunkte im Speicher bei Auswahl einer der Wegpunkte durch die Eingabeeinrichtung bestimmt, und dass er zusätzliche gespeicherte Daten unter Verwendung des Senders von dem Kartenspeicher und der Übertragungsvorrichtung bei Auswahl eines der Wegpunkte anfordert, falls zusätzliche gespeicherte Daten nicht im Speicher verfügbar sind.

Die JP 2002 131 065 A offenbart ein Navigationssystem zur Ermittlung eines Routenvorschlags. Dabei können Werbeanzeigen von auf der Route gelegenen Läden und Einrichtungen angezeigt werden.

Die JP 2004 227 162 A offenbart eine Navigationsanordnung, bei deren Betrieb ein Navigationsserver einen Routenvorschlag für das Fahrzeug in Abhängigkeit von Werbeinformationen eines Sponsors berechnet.

Die EP 1 376 059 A2 offenbart ein Verfahren zum Bereitstellen von positionsbezogenen Werbeanzeigen mit Routeninformationen. Dabei werden auf einer geographischen Karte Werbezonen definiert. Ein Werbetreiber kann Werbenachrichten mit einer Werbezone verknüpfen. Fährt ein Fahrzeug durch eine mit einer Werbenachricht verknüpfte Werbezone, wird ihm die entsprechende Werbenachricht ausgegeben.

Schließlich offenbart die US 2004/0204848 A1 eine Navigationsvorrichtung zum Herunterladen von Kartendaten. Die Navigationsanordnung umfasst dabei eine Sucheinheit und ein Navigationsendgerät, welches bei einem Server registriert ist. Auf Anfrage können von der Sucheinheit bestimmte Informationen an das Navigationsendgerät übermittelt werden, welche dann mit der Navigationsroute ausgegeben werden können.

Es ist Aufgabe der Erfindung, die Navigation für ein Kraftfahrzeug zu verbessern. Dabei ist es insbesondere wünschenswert, eine besonders hochwertige Navigation mit begrenztem Bedienaufwand zu schaffen.

Diese Aufgabe wird durch den Gegenstand der Ansprüche 1, 7, 13 und 30 gelöst.

Vorgenannte Aufgabe wird insbesondere durch eine Navigationsanordnung für ein Kraftfahrzeug gelöst, wobei die Navigationsanordnung ein räumlich von dem Kraftfahrzeug getrenntes off-board-Navigationssystem, insbesondere zur Berechnung eines Routenvorschlags für das Kraftfahrzeug, eine drahtlose Kommunikationsverbindung zwischen dem off-board-Navigationssystem und dem Kraftfahrzeug zur Übertragung eines Routenvorschlags für das Kraftfahrzeug und/oder einer Kartendarstellung von der Umgebung des Kraftfahrzeuges von dem off-board-Navigationssystem an das Kraftfahrzeug und eine in dem Kraftfahrzeug angeordnete Mensch-Maschine-Schnittstelle zur Ausgabe des Routenvorschlags oder der Kartendarstellung an einen Bediener des Kraftfahrzeuges in Verbindung oder zusammen mit einer Zusatzinformation umfasst, und wobei die Bereitstellung der Zusatzinformation einem Dritten zugänglich ist.

Erfindungsgemäß wird von dem Kraftfahrzeug eine Information in Bezug auf die Position des Kraftfahrzeuges an das off-board-Navigationssystem übertragen. Dabei wird die Information in Bezug auf die Position des Kraftfahrzeuges, insbesondere anonymisiert, erfindungsgemäß gegen eine Gebühr einem Dritten zugänglich gemacht. Dabei kann insbesondere eine aufbereitete Information in Bezug auf die Positionen mehrerer Kraftfahrzeuge zugänglich gemacht werden. Die Information in Bezug auf die Position des Kraftfahrzeuges bzw. die aufbereitete Information in Bezug auf die Positionen mehrerer Kraftfahrzeuge kann zum Einziehen einer Straßenbenutzungsgebühr, zur Verbesserung von Kartendarstellungen, zur Ermittlung von Verkehrsinformationen und/oder zur Optimierung des Verkehrsflusses verwendet werden.

Ein Routenvorschlag im Sinne der Erfindung kann z.B. eine Soll-Route zu einem Ziel und/oder eine Soll-Fahrtrichtungsangabe sein. Ein off-board-Navigationssystem im Sinne der Erfindung ist insbesondere als ortsfester Server ausgestaltet.

Eine drahtlose Kommunikationsverbindung im Sinne der Erfindung kann auch einen nicht drahtlosen Anteil umfassen. Eine drahtlose Kommunikationsverbindung im Sinne der Erfindung ist insbesondere eine Kommunikationsverbindung, die zumindest zum Kraftfahrzeug drahtlos ist. Eine drahtlose Kommunikationsverbindung im Sinne der Erfindung ist insbesondere eine drahtlose Verbindung ins Internet (z.B. WLAN). Drahtlose Kommunikationsverbindungen können auch WIFI, WIMAX, RF, Mobilfunk, etc. sein. Es kann vorgesehen sein, dass-abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc.. Darüber hinaus kann ein nahtloser Übergang zwischen einem online- und einem offline-Betrieb vorgesehen sein, wobei ein Routenvorschlag ggf. mit Karteninformation auf einem on-board-Speicher abgespeichert wird.

Eine Kartendarstellung im Sinne der Erfindung kann eine Karte, ein Satellitenbild oder eine 3D-Graphik sein. Die Karte, das Satellitenbild bzw. die 3D-Graphik kann dabei z.B. in Draufsicht, in Vogelperspektive oder in first-person-view dargestellt werden.

Zusatzinformation, deren Bereitstellung einem Dritten zugänglich ist, kann im Sinne der Erfindung insbesondere eine Werbung sein, die dem Dritten gegen eine Gebühr ermöglicht wird.

In einer Ausgestaltung der Erfindung ist die Darstellung der Zusatzinformation von der Position des Kraftfahrzeuges, der Zeit, einer Suchhistorie und/oder einer Kundenpräferenz abhängig. Dass die Darstellung der Zusatzinformation von der Position des Kraftfahrzeuges, der Zeit, einer Suchhistorie und/oder einer Kundenpräferenz abhängig ist kann im Sinne der Erfindung bedeuten, dass die Art der Darstellung der Zusatzinformation von diesen Informationen abhängig gemacht wird und/oder dass von diesen Informationen abhängig gemacht wird, ob überhaupt eine Darstellung der Zusatzinformation erfolgt.

In einer weiteren Ausgestaltung der Erfindung ist die Zusatzinformation als Text, Logo und/oder Bild darstellbar.

In einer weiteren Ausgestaltung der Erfindung ist die Zusatzinformation der Kartendarstellung überlagert darstellbar.

In einer weiteren Ausgestaltung der Erfindung ist die Zusatzinformation akustisch ausgebbar.

Vorgenannte Aufgabe wird zudem durch eine Navigationsanordnung für ein Kraftfahrzeug gelöst, wobei die Navigationsanordnung ein räumlich von dem Kraftfahrzeug getrenntes off-board-Navigationssystem, insbesondere zur Berechnung eines Routenvorschlags für das Kraftfahrzeug, eine drahtlose Kommunikationsverbindung zwischen dem off-board-Navigationssystem und dem Kraftfahrzeug zur Übertragung eines Routenvorschlags für das Kraftfahrzeug und/oder einer Kartendarstellung von der Umgebung des Kraftfahrzeuges von dem off-board-Navigationssystem an das Kraftfahrzeug und eine in dem Kraftfahrzeug angeordnete Mensch-Maschine-Schnittstelle zur Ausgabe des Routenvorschlags oder der Kartendarstellung an einen Bediener des Kraftfahrzeuges in Verbindung oder zusammen mit einer kommerziellen Werbung umfasst.

Ein Routenvorschlag im Sinne der Erfindung kann z.B. eine Soll-Route zu einem Ziel und/oder eine Soll-Fahrtrichtungsangabe sein.

Ein off-board-Navigationssystem im Sinne der Erfindung ist insbesondere als ortsfester Server ausgestaltet.

Eine drahtlose Kommunikationsverbindung im Sinne der Erfindung kann auch einen nicht drahtlosen Anteil umfassen. Eine drahtlose Kommunikationsverbindung im Sinne der Erfindung ist insbesondere eine Kommunikationsverbindung, die zumindest zum Kraftfahrzeug drahtlos ist. Eine drahtlose Kommunikationsverbindung im Sinne der Erfindung ist insbesondere eine drahtlose Verbindung ins Internet (z.B. WLAN). Drahtlose Kommunikationsverbindungen können auch WIFI, WIMAX, RF, Mobilfunk, etc. sein. Es kann vorgesehen sein, dass-abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc.. Darüber hinaus kann ein nahtloser Übergang zwischen einem online- und einem offline-Betrieb vorgesehen sein, wobei ein Routenvorschlag ggf. mit Karteninformation auf einem on-board-Speicher abgespeichert wird.

Eine Kartendarstellung im Sinne der Erfindung kann eine Karte, ein Satellitenbild oder eine 3D-Graphik sein. Die Karte, das Satellitenbild bzw. die 3D-Graphik kann dabei z.B. in Draufsicht, in Vogelperspektive oder in first-person-view dargestellt werden.

In einer Ausgestaltung der Erfindung ist die Darstellung der kommerziellen Werbung von der Position des Kraftfahrzeuges, der Zeit, einer Suchhistorie und/oder einer Kundenpräferenz abhängig. Dass die Darstellung der kommerziellen Werbung von der Position des Kraftfahrzeuges, der Zeit, einer Suchhistorie und/oder einer Kundenpräferenz abhängig ist kann im Sinne der Erfindung bedeuten, dass die Art der Darstellung der kommerziellen Werbung von diesen Informationen abhängig gemacht wird und/oder dass von diesen Informationen abhängig gemacht wird, ob überhaupt eine Darstellung der kommerziellen Werbung erfolgt.

In einer weiteren Ausgestaltung der Erfindung ist die kommerzielle Werbung als Text, Logo und/oder Bild darstellbar.

In einer weiteren Ausgestaltung der Erfindung ist die kommerzielle Werbung der Kartendarstellung überlagert darstellbar.

In einer weiteren Ausgestaltung der Erfindung ist die kommerzielle Werbung akustisch ausgebbar.

Vorgenannte Aufgabe wird zudem durch ein Verfahren zum Betrieb einer - insbesondere eines oder mehrere der vorgenannten Merkmale umfassenden - Navigationsanordnung für ein Kraftfahrzeug gelöst, wobei die Navigationsanordnung ein räumlich von dem Kraftfahrzeug getrenntes off-board-Navigationssystem, insbesondere zur Berechnung eines Routenvorschlags für das Kraftfahrzeug, umfasst, wobei ein Routenvorschlags für das Kraftfahrzeug und/oder eine Kartendarstellung von der Umgebung des Kraftfahrzeuges von dem off-board-Navigationssystem an das Kraftfahrzeug, insbesondere mittels einer drahtlosen Internetverbindung, drahtlos übertragen wird, wobei eine kommerzielle Werbung von dem off-board-Navigationssystem an das Kraftfahrzeug drahtlos übertragen wird, und wobei die kommerzielle Werbung an einen Bediener des Kraftfahrzeuges ausgegeben wird.

Ein Routenvorschlag im Sinne der Erfindung kann z.B. eine Soll-Route zu einem Ziel und/oder eine Soll-Fahrtrichtungsangabe sein.

Ein off-board-Navigationssystem im Sinne der Erfindung ist insbesondere als ortsfester Server ausgestaltet.

Eine Kartendarstellung im Sinne der Erfindung kann eine Karte, ein Satellitenbild oder eine 3D-Graphik sein. Die Karte, das Satellitenbild bzw. die 3D-Graphik kann dabei z.B. in Draufsicht, in Vogelperspektive oder in first-person-view dargestellt werden.

In einer weiteren Ausgestaltung der Erfindung erfolgt eine Ausgabe des Routenvorschlags oder der Kartendarstellung an einen Bediener des Kraftfahrzeuges, insbesondere in Verbindung oder zusammen mit der kommerziellen Werbung. Dabei können insbesondere kommerzielle Werbungen für Einrichtungen, wie Servicestationen, Tankstellen, Reparaturwerkstätten, Autohäuser, Hotels, Motels, Restaurants etc., entlang des Routenvorschlags dargestellt werden. Dies gilt insbesondere in Bezug auf eine Routenvorschau.

In einer weiteren Ausgestaltung der Erfindung wird die kommerzielle Werbung in Abhängigkeit der Position des Kraftfahrzeuges, der Zeit, einer Suchhistorie und/oder einer Kundenpräferenz dargestellt. Dass die Darstellung der kommerziellen Werbung von der Position des Kraftfahrzeuges, der Zeit, einer Suchhistorie und/oder einer Kundenpräferenz abhängig ist kann im Sinne der Erfindung bedeuten, dass die Art der Darstellung der kommerziellen Werbung von diesen Informationen abhängig gemacht wird und/oder dass von diesen Informationen abhängig gemacht wird, ob überhaupt eine Darstellung der kommerziellen Werbung erfolgt.

In einer weiteren Ausgestaltung der Erfindung wird die kommerzielle Werbung als Text, Logo und/oder Bild dargestellt.

In einer weiteren Ausgestaltung der Erfindung wird die kommerzielle Werbung der Kartendarstellung überlagert dargestellt.

In einer weiteren Ausgestaltung der Erfindung wird die kommerzielle Werbung akustisch ausgegeben.

In einer weiteren Ausgestaltung der Erfindung fließen mittels der kommerziellen Werbung erzielte Einnahmen zumindest zum Teil dem Hersteller des Kraftfahrzeuges zu.

In einer weiteren Ausgestaltung der Erfindung werden mittels der kommerziellen Werbung erzielte Einnahmen zwischen dem Hersteller des Kraftfahrzeuges, einem Provider einer drahtlosen Internetverbindung, mittels der der Routenvorschlag für das Kraftfahrzeug und/oder die Kartendarstellung von der Umgebung des Kraftfahrzeuges von dem off-board-Navigationssystem an das Kraftfahrzeug übertragen wird, und einem Provider der Kartendarstellung geteilt.

In einer weiteren Ausgestaltung der Erfindung wird dem Benutzer des Kraftfahrzeuges mittels der kommerziellen Werbung ein Rabatt gewährt oder in Aussicht gestellt. Dies kann z.B. insbesondere bei kommerzieller Werbung für Servicestationen, Tankstellen, Reparaturwerkstätten, Autohäuser, Hotels, Motels, Restaurants etc. erfolgen. Dabei können exklusive Preisabkommen zwischen dem Hersteller des Kraftfahrzeuges und dem Unternehmen, das mittels der kommerziellen Werbung wirbt, vorgesehen sein.

In einer weiteren Ausgestaltung der Erfindung wird dem Benutzer des Kraftfahrzeuges mittels der kommerziellen Werbung ein garantierter Parkplatz gewährt oder in Aussicht gestellt.

In einer weiteren Ausgestaltung der Erfindung fließen mittels der kommerziellen Werbung erzielte Einnahmen zumindest zum Teil dem Ausbau und/oder der Pflege der Navigationsanordnung zu. Dies kann eine off-board-seitige oder eine on-board-seitige Infrastruktur der Navigationsanordnung betreffen.

In einer weiteren Ausgestaltung der Erfindung werden die Kosten für eine Infrastruktur zum drahtlosen Übertragen des Routenvorschlags für das Kraftfahrzeug und/oder der Kartendarstellung von der Umgebung des Kraftfahrzeuges von dem off-board-Navigationssystem an das Kraftfahrzeug zumindest für einen Streckenabschnitt zumindest zum Teil von zumindest einem Sponsor getragen.

In einer weiteren Ausgestaltung der Erfindung wird eine Notfallinformation von dem off-board-Navigationssystem an das Kraftfahrzeug mit einer größeren Bandbreite als die kommerzielle Werbung übertragen.

In einer weiteren Ausgestaltung der Erfindung werden einem Nutzer eines Kraftfahrzeuges gegen eine Gebühr bestimmte Optionen, insbesondere Vertraulichkeitsoptionen, angeboten. Derartige Optionen, insbesondere Vertraulichkeitsoptionen, können die Identität des Nutzers, Routen, Zeit etc. betreffen.

In einer weiteren Ausgestaltung der Erfindung wird die Information in Bezug auf eine erwartete Ankunftszeit an einem Zielpunkt, insbesondere anonymisiert, gegen eine Gebühr einem Dritten zugänglich gemacht. Mittels dieser Information kann ein Bottleneck-Management in Bezug auf Einrichtungen wie Parkplätze, Hotels etc. durchgeführt werden.

In einer weiteren Ausgestaltung der Erfindung werden Routen von Kraftfahrzeugen aufgezeichnet. Mittels einer solchen Information können Entscheidungen über straßenseitige Werbung getroffen werden.

Vorgenannte Aufgabe wird zudem durch ein - insbesondere für eine eines oder mehrere der vorgenannten Merkmale umfassende Navigationsanordnung geeignetes - Kraftfahrzeug gelöst, wobei das Kraftfahrzeug ein Navigationssystem zur Ermittlung eines Routenvorschlags für das Kraftfahrzeug, eine dem Navigationssystem zugeordnete Mensch-Maschine-Schnittstelle zur Ausgabe des Routenvorschlags für das Kraftfahrzeug und/oder einer Kartendarstellung von der Umgebung des Kraftfahrzeuges und eine drahtlose Internetschnittstelle zum Empfangen einer kommerziellen Werbung umfasst, und wobei die kommerzielle Werbung in Verbindung oder zusammen mit dem Routenvorschlag oder der Kartendarstellung an einen Bediener des Kraftfahrzeuges ausgebbar ist.

Kraftfahrzeug im Sinne der Erfindung(en) ist insbesondere ein individuell im Straßenverkehr benutzbares Landfahrzeug. Kraftfahrzeuge im Sinne der Erfindung(en) sind insbesondere nicht auf Landfahrzeuge mit Verbrennungsmotor beschränkt. Eine in einem Kraftfahrzeug angeordnete Mensch-Maschine-Schnittstelle im Sinne der Erfindung(en) ist insbesondere eine Mensch-Maschine-Schnittstelle, die Teil des Kraftfahrzeuges ist.

Durch die Erfindung(en) wird es ermöglicht, eine besonders hochwertige Navigation bereitzustellen, den Bediener des Kraftfahrzeuges jedoch von Einloggvorgängen zur Deckung der Kosten der damit verbundenen aufwändigen Infrastruktur zu entlasten. Dies wird dadurch erreicht, dass Bezahlvorgänge von dem Bediener des Kraftfahrzeuges zu einem Dritten verlagert werden. Auf diese Weise wird der Bedienaufwand für die besonders hochwertige Navigation begrenzt.

Weitere Vorteile und Einzelheiten in Bezug auf die Erfindung ergeben sich aus der nachfolgenden Beschreibung von Ausführungsbeispielen.
- Fig. 1: zeigt ein Ausführungsbeispiel einer Navigationsanordnung für ein Kraftfahrzeug;
- Fig. 2: zeigt ein Ausführungsbeispiel eines Kraftfahrzeuges mit einem Navigationssystem in einer Prinzipdarstellung;
- Fig. 3: zeigt ein vereinfachtes Ausführungsbeispiel eines Verfahrensablaufs zur Unterstützung einer Navigationsanordnung gemäß Fig. 1;
- Fig. 4: zeigt ein Ausführungsbeispiel eines Verfahrens zum Betrieb einer Navigationsanordnung gemäß Fig. 1;
- Fig. 5: zeigt ein Ausführungsbeispiel einer Draufsicht-Darstellung einer in eine 3D-Graphik integrierten Route mittels eines Touchscreens;
- Fig. 6: zeigt ein Ausführungsbeispiel einer Vogelperspektive-Darstellung einer in eine 3D-Graphik integrierten Route mittels eines Touchscreens;
- Fig. 7: zeigt ein Ausführungsbeispiel einer Anzeige einer Eingabemaske zur Eingabe eines Start- und eines Zielortes mittels eines Touchscreens;
- Fig. 8: zeigt ein Ausführungsbeispiel einer Anzeige einer Eingabemaske zur Auswahl eines Zielortes mittels eines Touchscreens;
- Fig. 9: zeigt ein Ausführungsbeispiel einer Anzeige zur Auswahl bevorzugter Routen mittels eines Touchscreens;
- Fig. 10: zeigt ein Ausführungsbeispiel einer Anzeige einer Routenübersicht mittels eines Touchscreens;
- Fig. 11: zeigt ein Ausführungsbeispiel einer Anzeige zur Bestätigung einer Spracheingabe mittels eines Touchscreens; und
- Fig. 12: zeigt ein Ausführungsbeispiel einer Anzeige eines durch Informationen ergänzten Satellitenbildes mittels eines Touchscreens.

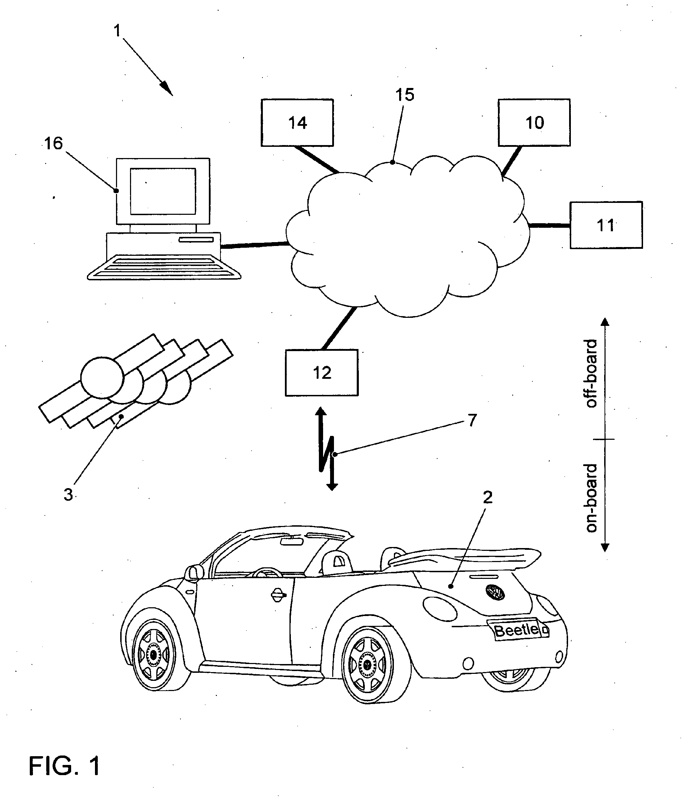

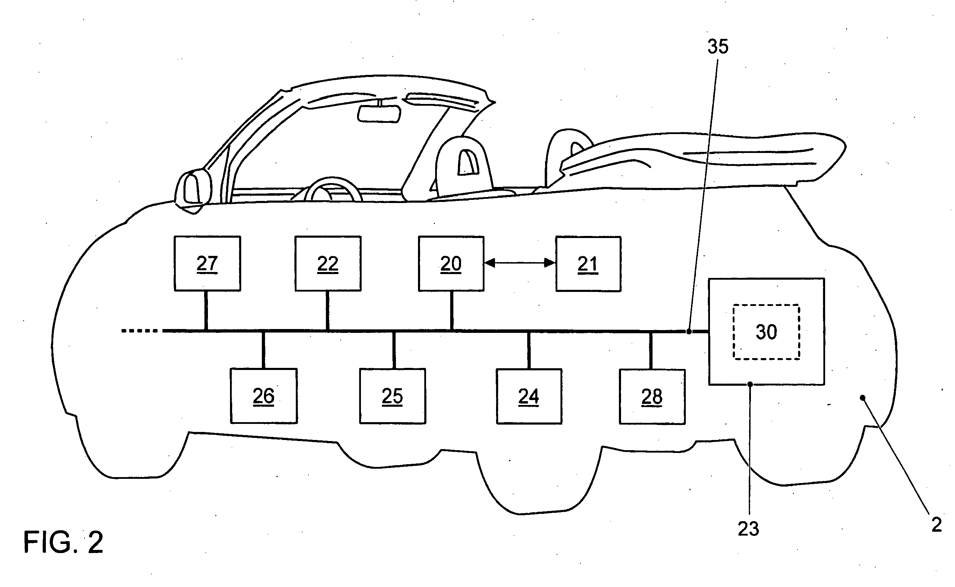

Fig. 1 zeigt ein Ausführungsbeispiel einer Navigationsanordnung 1 für ein in Fig. 2 detailliert dargestelltes Kraftfahrzeug 2. Die Navigationsanordnung 1 umfasst ein räumlich von dem Kraftfahrzeug 2 getrenntes off-board-Navigationssystem 10 zur Berechnung eines Routenvorschlags (Soll-Route zu einem Ziel und/oder Soll-Fahrtrichtungsangabe) für das Kraftfahrzeug 2, der von dem off-board-Navigationssystem 10 an das Kraftfahrzeug 2 mittels einer drahtlosen Internetverbindung übertragbar ist.

Zur Implementierung der drahtlosen Internetverbindung umfasst die Navigationsanordnung 1 Knoten 11, 12, 14, die einen drahtlosen Zugang in das Internet 15 ermöglichen. Dabei kann zwischen den Knoten 11, 12, 14 und dem Kraftfahrzeug 2 eine drahtlose Kommunikationsverbindung 7 aufgebaut werden. Die drahtlose Kommunikationsverbindung 7 ist insbesondere ein WLAN. Es kann aber auch vorgesehen sein, dass eine drahtlose Kommunikationsverbindung 7 als WIFI-Verbindung, WIMAXI-Verbindung, RFI-Verbindung, Mobilfunk-Verbindung, etc. implementiert ist. Es kann auch vorgesehen sein, dass - abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc.. Der Datenaustausch innerhalb der Navigationsanordnung 1 kann verschlüsselt erfolgen.

Über das Internet 15 ist zudem ein Datenaustausch zwischen dem off-board-Navigationssystem 10 und einem anderen Terminal 16 möglich. Das andere Terminal 16 oder ein Bediener des anderen Terminals 16 kann ein Ausführungsbeispiel für einen Dritten im Sinne der Ansprüche sein.

Das - in Fig. 2 dargestellte - Kraftfahrzeug 2 umfasst eine als Touchscreen 21 ausgestaltete Mensch-Maschine-Schnittstelle zur Ausgabe des Routenvorschlags an einen Bediener des Kraftfahrzeuges 2. Dazu ist der Touchscreen 21 mittels einer Anzeigesteuerung 20 ansteuerbar, die mittels eines Bussystems 35 mit einer Schnittstelle 22 (Internetschnittstelle) für die drahtlose Kommunikationsverbindung 7 verbunden ist. Der Touchscreen 21 kann - wie im vorliegenden Ausführungsbeispiel - auch zur Bedienung eines Infotainmentsystems 24, eines Telefons 25 oder einer Klimaautomatik 26 genutzt werden.

Das Kraftfahrzeug 2 umfasst ein - im vorliegenden Ausführungsbeispiel ein in ein on-board-Navigationssystem 23 integriertes - Ortungssystem 30 zur Bestimmung der Position des Kraftfahrzeuges 2, der Ausrichtung des Kraftfahrzeuges 2 und/oder der on-board-Zeit in Abhängigkeit von von Satelliten 3 gesendeten Signalen. Die Position des Kraftfahrzeuges 2, die Ausrichtung des Kraftfahrzeuges 2 und/oder die on-board-Zeit sind mittels der drahtlosen Kommunikationsverbindung 7 an das off-board-Navigationssystem 10 übertragbar. Die Position des Kraftfahrzeuges 2 kann auch eine Größe sein, aus der die Position des Kraftfahrzeuges 2 ermittelbar ist, wie z.B. von dem Kraftfahrzeug 2 empfangene GPS-Signale. Werden z.B. die von dem Kraftfahrzeug empfangenen GPS-Signale an das off-board-Navigationssystem 10 übertragen, so ermittelt dieses die Position des Kraftfahrzeuges 2 und die Ausrichtung des Kraftfahrzeuges 2 sowie unter Umständen die on-board-Zeit.

Mittels des Touchscreens 21 ist auch ein Ziel eingebbar, das ebenfalls mittels der drahtlosen Kommunikationsverbindung 7 an das off-board-Navigationssystem 10 übertragbar ist. Das off-board-Navigationssystem 10 ermittelt den Routenvorschlag unter anderem in Abhängigkeit der Position des Kraftfahrzeuges 2 und des gewünschten Ziels und übermittelt ihn mittels der drahtlosen Kommunikationsverbindung 7 an das Kraftfahrzeug 2. Darüber hinaus kann das off-board-Navigationssystem 10 kommerzielle Werbung an das Kraftfahrzeug 2 übermitteln. Der Routenvorschlag sowie unter Umständen die kommerzielle Werbung sind, insbesondere mittels des off-board-Navigationssystems 10, integriert in ein Satellitenbild oder eine 3D-Graphik darstellbar und/oder in dieser Form an das Kraftfahrzeug übertragbar bzw. mittels des Touchscreens 21 darstellbar. Dabei kann vorgesehen sein, dass ein Bediener den Blickwinkel einstellen kann (z.B. von Draufsicht über Vogelperspektive zu first-person-view und umgekehrt).

In Bezug auf die Übertragung des Routenvorschlags in ein Satellitenbild und/oder eine 3D-Graphik oder eine andere Karteninformation bzw. in Bezug auf die Übertragung von Satellitenbildern und/oder 3D-Graphiken oder anderer Karteninformationen zur Darstellung des Routenvorschlags können die im Folgenden als predictive catching, tunnel vision bzw. profile based prediction bezeichneten Strategien vorgesehen werden. Beim predictive catching werden nur Satellitenbilder und/oder 3D-Graphiken oder andere Karteninformationen übertragen, die auch gebraucht werden. Bei der Strategie "tunnel vision" werden nur Satellitenbilder und/oder 3D-Graphiken oder andere Karteninformationen entlang des Routenvorschlags mit hoher Informationsdichte übertragen. An der Peripherie der Route werden die Satellitenbilder und/oder 3D-Graphiken oder andere Karteninformationen dagegen mit geringer Informationsdichte übertragen. Bei der Strategie "profile based prediction" werden Satellitenbilder und/oder 3D-Graphiken oder andere Karteninformationen angepasst an die Präferenzen eines Bedieners übertragen. Der Routenvorschlag und die Satellitenbilder und/oder die 3D-Graphiken oder andere Karteninformationen können in einem mit Bezugszeichen 28 bezeichneten Speicher abgespeichert werden.

Es kann vorgesehen sein, dass in Bezug auf die Satellitenbilder zwischen verschiedenen Modi, wie z.B. Nachtmodus, Tagmodus, saisonal abhängige Modi, wetterabhängige Modi, etc., gewählt werden kann. Es kann auch vorgesehen sein, dass eine Karte, ein Satellitenbild und/oder eine 3D-Graphik um Informationen von on-board-Sensorik 27 (Nigth-Vision, Straßenzustandssensorik) ergänzt wird.

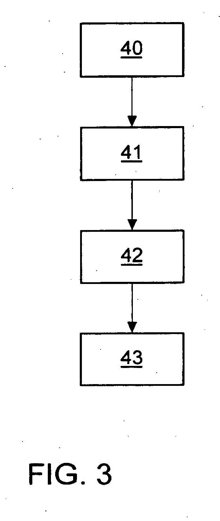

Fig. 3 zeigt ein vereinfachtes Ausführungsbeispiel eines Verfahrensablaufs zur Unterstützung der Navigationsanordnung 1. Dabei erfolgt in einem Schritt 40 eine entsprechende Anfrage eines Dritten zum Platzieren einer kommerziellen Werbung oder in Bezug auf Sponsoring. Die Anfrage kann z.B. mittel des Terminals 16 über das Internet 15 erfolgen. Die Anfrage kann jedoch auch auf andere Weise erfolgen.

Dem Schritt 40 folgt ein Schritt 41, in dem die kommerzielle Werbung oder das Sponsoring implementiert wird. Dabei kann z.B. im Schritt 41 eine entsprechende kommerzielle Werbung in das off-board-Navigationssystem 10 eingespielt werden. Es kann auch vorgesehen werden, dass dem Dritten im Schritt 41 eine Information in Bezug auf die Position des Kraftfahrzeuges 2, insbesondere anonymisiert, (gegen eine Gebühr) zugänglich gemacht wird. Dabei kann insbesondere eine aufbereitete Information in Bezug auf die Positionen mehrerer Kraftfahrzeuge zugänglich gemacht werden. Die Information in Bezug auf die Position des Kraftfahrzeuges bzw. die aufbereitete Information in Bezug auf die Positionen mehrerer Kraftfahrzeuge kann zum Einziehen einer Straßenbenutzungsgebühr, zur Verbesserung von Kartendarstellungen, zur Ermittlung von Verkehrsinformationen und/oder zur Optimierung des Verkehrsflusses verwendet werden.

Es kann auch vorgesehen werden, dass dem Dritten im Schritt 41 eine Information in Bezug auf eine erwartete Ankunftszeit des Kraftfahrzeuges an einem Zielpunkt, insbesondere anonymisiert, (gegen eine Gebühr) zugänglich gemacht wird. Mittels dieser Information kann von dem Dritten z.B. ein Bottleneck-Management in Bezug auf Einrichtungen wie Parkplätze, Hotels etc. durchgeführt werden.

Es kann auch vorgesehen werden, dass im Schritt 41 Routen von Kraftfahrzeugen aufgezeichnet und dem Dritten (gegen eine Gebühr) zugänglich gemacht werden. Mittels einer solchen Information können Entscheidungen über straßenseitige Werbung getroffen werden.

Es kann auch vorgesehen werden, dass der Dritte Einfluss auf den Routenvorschlag nehmen kann. Wird dies gewünscht, wird im Schritt 41 eine entsprechende Priorisierung einer Route oder bestimmter Streckenabschnitte on das off-board-Navigationssystem 10 eingespielt

Dem Schritt 41 folgt ein Schritt 42, in dem eine Bezahlung der kommerziellen Werbung oder des Sponsoring erfolgt. Dem Schritt 42 folgt ein Schritt 43, in dem die eingenommenen Gelder zugewiesen werden. Dabei ist insbesondere vorgesehen, dass die mittels der kommerziellen Werbung bzw. des Sponsoring erzielten Einnahmen zumindest zum Teil dem Hersteller des Kraftfahrzeuges zufließen. Dabei kann vorgesehen sein, dass die mittels der kommerziellen Werbung bzw. des Sponsorings erzielten Einnahmen zwischen dem Hersteller des Kraftfahrzeuges, einem Provider der Knoten 11, 12, 14 bzw. der Datenübertragung und einem Provider der Kartendarstellung aufgeteilt werden. Dabei kann ein Teil der mittels der kommerziellen Werbung bzw. des Sponsorings erzielten Einnahmen zumindest zum Teil dem Ausbau und/oder der Pflege der Navigationsanordnung 1 zufließen. Dies kann eine off-board-seitige oder eine on-board-seitige Infrastruktur der Navigationsanordnung 1 betreffen. Ist ein Sponsoring eines Streckenabschnitts vorgesehen, so kann vorgesehen sein, dass ein nicht unerheblicher Anteil der Einnahmen aus diesem Sponsoring dem Aufbau, dem Ausbau und/oder der Pflege der Knoten 11, 12, 14 in diesem Streckenabschnitt und/oder zur Deckung der Verbindungsgebühren verwendet werden.

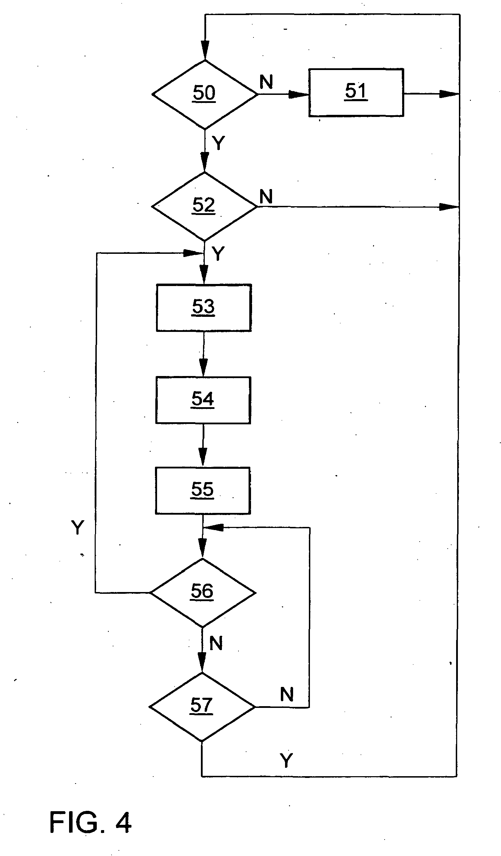

Fig. 4 zeigt ein vereinfachtes Ausführungsbeispiel eines Verfahrensablaufs zur Unterstützung der Navigation des Kraftfahrzeuges 2, insbesondere ein Ausführungsbeispiel eines Verfahrensablaufs zum Betrieb der Navigationsanordnung 1. Der Verfahrensablauf beginnt mit einer Abfrage 50, ob die Kommunikationsverbindung 7 zum off-board-Navigationssystem 10 zur Verfügung steht. Steht die Kommunikationsverbindung 7 zum off-board-Navigationssystem 10 nicht zur Verfügung, so folgt der Abfrage 50 ein Schritt 51, der die Bedienung des on-board-Navigationssystems ermöglicht. Steht die Kommunikationsverbindung 7 zum off-board-Navigationssystem 10 dagegen zur Verfügung, so folgt der Abfrage 50 eine Abfrage 52, ob eine Zieleingabe erfolgt.

Erfolgt keine Zieleingabe, so folgt der Abfrage 52 erneut die Abfrage 50. Erfolgt dagegen eine Zieleingabe, so folgt der Abfrage 52 ein Schritt 53, in dem die Position des Kraftfahrzeuges 2 bestimmt wird und in dem das gewünschte Ziel und die Position des Kraftfahrzeuges 2 an das off-board-Navigationssystem 10 übertragen werden. Darüber hinaus können bestimmte Optionen, wie eine möglichst kurze oder eine möglichst schnelle Verbindung, sowie insbesondere auch Vertraulichkeitsoptionen, die z.B. die Identität des Nutzers, Routen, Zeit etc. betreffen, an das off-board-Navigationssystem 10 übertragen werden. Es kann vorgesehen sein, dass Vertraulichkeitsoptionen nur gegen Gebühr berücksichtigt werden.

Dem Schritt 53 folgt ein Schritt 54, in dem mittels des off-board-Navigationssystems 10 ein Routenvorschlag ermittelt und an das Kraftfahrzeug 2 übertragen wird. Ist z.B. das Platzieren einer kommerziellen Werbung vorgesehen, so wird diese ebenfalls an das Kraftfahrzeug 2 übertragen. Die Ermittlung des Routenvorschlags erfolgt insbesondere in Abhängigkeit des Startpunktes und des Zielpunktes sowie der vorgenannten Optionen, wie eine möglichst kurze oder eine möglichst schnelle Verbindung. Darüber hinaus kann vorgesehen sein, dass alternative Routenvorschläge für das Kraftfahrzeug bestimmt werden und ein Routenvorschlag für das Kraftfahrzeug in Abhängigkeit eines finanziellen Beitrags eines Sponsors aus im Wesentlichen gleichwertigen Routenvorschlägen ausgewählt wird.

Dem Schritt 54 folgt ein Schritt 55, in dem der Routenvorschlag mittels des Touchscreens 21 angezeigt wird. Darüber hinaus wird, wenn z.B. das Platzieren einer kommerziellen Werbung vorgesehen ist, diese ebenfalls an einen Bediener des Kraftfahrzeuges 2, z.B. durch Anzeige auf dem Touchscreens 21, ausgegeben. Dabei kann die kommerzielle Werbung, insbesondere in Bezug auf eine Routenvorschau, in Verbindung oder zusammen mit der Ausgabe des Routenvorschlags oder einer Kartendarstellung ausgegeben werden. Dies kann insbesondere für Einrichtungen, wie Servicestationen, Tankstellen, Reparaturwerkstätten, Autohäuser, Hotels, Motels, Restaurants etc., erfolgen. Darüber hinaus kann vorgesehen sein, dass die kommerzielle Werbung in Abhängigkeit der Position des Kraftfahrzeuges 2, der Zeit, einer Suchhistorie und/oder einer Kundenpräferenz dargestellt wird. Dies kann bedeuten, dass die Art der Darstellung der kommerziellen Werbung von diesen Informationen abhängig gemacht wird und/oder dass von diesen Informationen abhängig gemacht wird, ob überhaupt eine Darstellung der kommerziellen Werbung erfolgt. Die kommerzielle Werbung kann als Text, Logo und/oder Bild dargestellt werden. Dabei kann vorgesehen sein, dass die kommerzielle Werbung der Kartendarstellung überlagert dargestellt wird. Alternativ oder zusätzlich zur Anzeige der kommerziellen Werbung auf dem Touchscreen 21 kann eine Ausgabe der kommerziellen Werbung auch akustisch erfolgen.

Inhaltlich kann die kommerzielle Werbung sich auf eine Anpreisung eines Produktes oder einer Einrichtung beschränken. Es kann jedoch auch vorgesehen sein, dass mittels der kommerziellen Werbung ein Rabatt gewährt oder in Aussicht gestellt wird. Dies kann z.B. insbesondere für kommerzielle Werbung für Servicestationen, Tankstellen, Reparaturwerkstätten, Autohäuser, Hotels, Motels, Restaurants etc. erfolgen. Dabei können exklusive Preisabkommen zwischen dem Hersteller.des Kraftfahrzeuges und dem Unternehmen, das mittels der kommerziellen Werbung wirbt, vorgesehen sein. Alternativ oder zusätzlich kann mittels der kommerziellen Werbung ein garantierter Parkplatz gewährt oder in Aussicht gestellt werden.

Dem Schritt 55 folgt eine Abfrage 56, ob der Routenvorschlag neu berechnet werden soll und (aufgrund der bestehenden Kommunikationsverbindung 7) neu berechnet werden kann. Soll und kann der Routenvorschlag neu berechnet werden, so folgt der Abfrage 56 der Schritt 53. Andernfalls folgt der Abfrage 56 eine Abfrage 57, ob der Verfahrensablauf abgebrochen werden soll. Soll der Verfahrensablauf abgebrochen werden, so folgt der Abfrage 56 die Abfrage 50. Andernfalls folgt der Abfrage 57 die Abfrage 56.

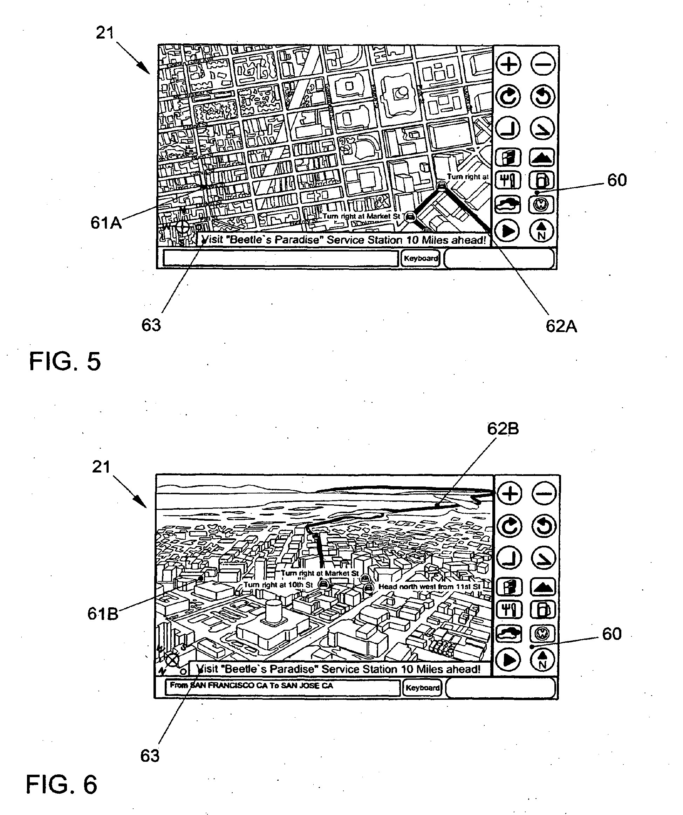

Fig. 5 zeigt ein Ausführungsbeispiel einer Draufsicht-Darstellung 61A eines in eine 3D-Graphik integrierten Routenvorschlags 62A mittels des Touchscreens 21. In dieser Darstellung können auch zusätzliche Informationen wie Points-Of-Interest (POIs) und/oder kommerzielle Werbung eingetragen werden. Alternativ oder zusätzlich kann - wie in dem Ausführungsbeispiel gemäß Fig. 5 vorgesehen - ein Werbefeld 63 zur Darstellung kommerzieller Werbung eingeblendet werden. Neben der Draufsicht-Darstellung 61A der 3D-Graphik ist eine Bedienleiste 60 dargestellt. Mittels dieser Bedienleiste 60 kann die Darstellung verändert werden und/oder andere und/oder zusätzliche Funktionen aktiviert bzw. bedient werden. So kann mittels der Bedienleiste 60 die in Fig. 5 gewählte Draufsicht-Darstellung 61A der 3D-Graphik - wie in Fig. 6 dargestellt - in eine Vogelperspektive-Darstellung 61 B verändert werden. Entsprechend wird der Routenvorschlag 62B in der Vogelperspektiven-Darstellung integriert dargestellt.

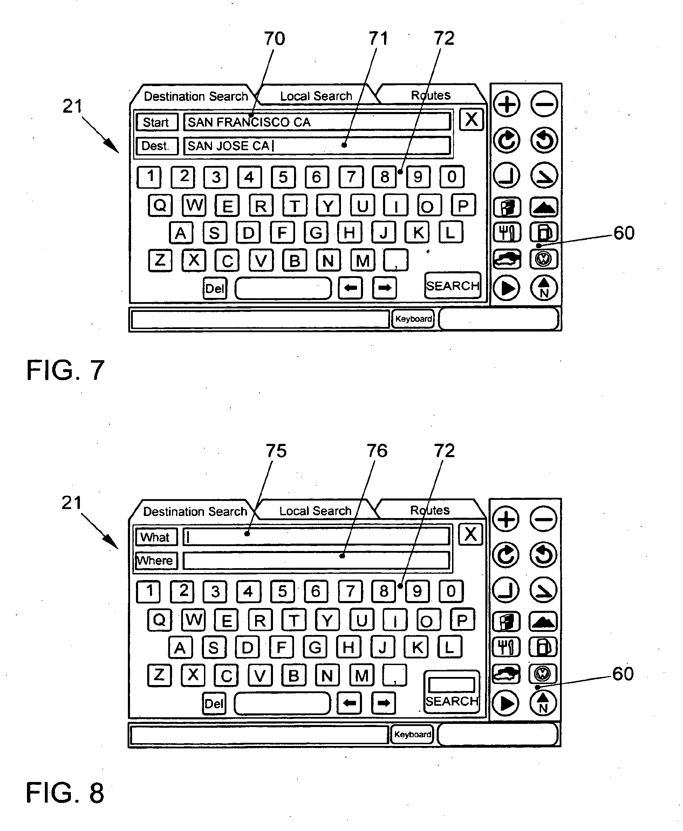

Fig. 7 zeigt ein Ausführungsbeispiel einer Anzeige einer Eingabemaske zur Eingabe eines Start- und eines Zielortes mittels des Touchscreens 21. In dem dargestellten Ausführungsbeispiel sind dazu ein Starteingabefeld 70 und Zieleingabefeld 71 vorgesehen. Die Zieleingabe kann z.B. alphanumerisch durch eine dargestellte Tastatur 72 erfolgen. Alternativ oder zusätzlich kann die Zieleingabe auch durch Spracheingabe oder Schrifterkennung (insbesondere einer Schrifterkennung zur Identifikation asiatischer Schriftzeichen) erfolgen. Die Selektion eines Ortes kann auf einer Karte, einem Satellitenbild und/oder einer 3D-Graphik erfolgen. In diesem Fall ist in einer Ausgestaltung eine Zoomfunktion für die Karte, das Satellitenbild und/oder die 3D-Graphik vorgesehen. Der Startort kann auch die aktuelle Position des Kraftfahrzeugs 2 sein.

Es kann auch vorgesehen sein, dass - wie in Fig. 8 dargestellt - ein Bediener des Kraftfahrzeuges 2 ein bestimmtes Objekt (Restaurant, Landmark, Geschäft, Tankstelle etc.) in einem bestimmten Such-Gebiet (Straße, Stadt, Postleitzahl, Kreis, etc.) suchen lassen kann. Dazu wird eine Eingabemaske mit einem Objekteingabefeld 75 zu Eingabe eines zu suchenden Objektes (Restaurant, Landmark, Geschäft, Tankstelle etc.) und ein Gebietseingabefeld 76 zu Eingabe des Such-Gebiets (Straße, Stadt, Postleitzahl, Kreis, etc.) dargestellt. Der Bediener kann anschließend einen Treffer aus den mittels dieser Suche ermittelten bzw. (z.B. in einer Karte, in einem Satellitenbild und/oder in einer 3D-Graphik) angebotenen Treffer aussuchen.

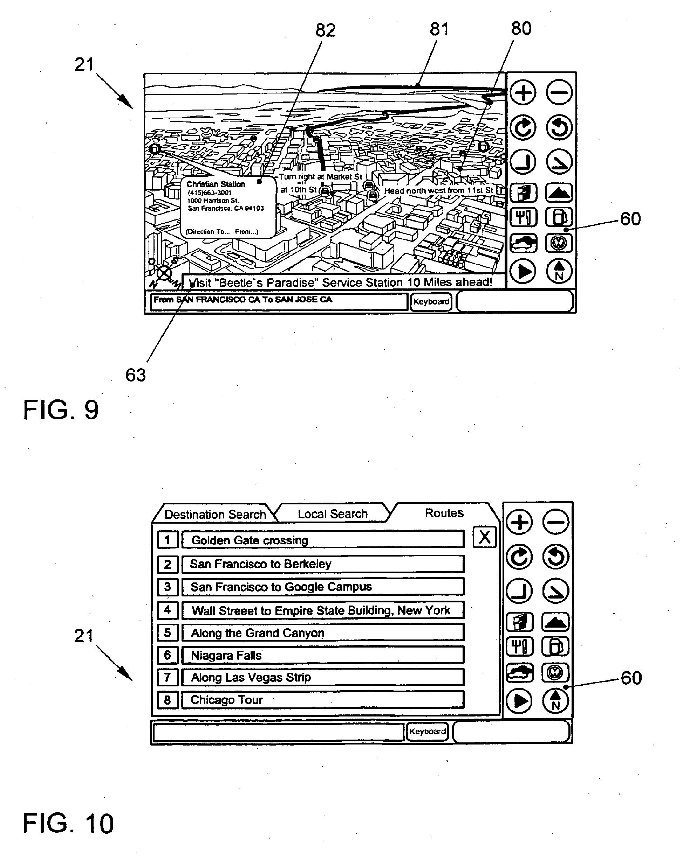

Erfolgt die Zieleingabe durch Spracheingabe so kann - wie in Fig. 9 dargestellt - eine graphische Bestätigung 82 der Spracheingabe erfolgen. Diese graphische Bestätigung 82 kann - wie in Fig. 9 dargestellt - z.B. (zeitlich begrenzt) eine Kartendarstellung überlagern. So zeigt das Ausführungsbeispiel gemäß Fig. 9 z.B. eine Vogelperspektiven-Darstellung 80 eines in eine 3D-Graphik integrierten Routenvorschlags 81 mittels des Touchscreens 21.

Es kann auch vorgesehen sein, dass bevorzugte Routen wählbar sind. So zeigt Fig. 10 ein Ausführungsbeispiel einer Anzeige zur Auswahl bevorzugter Routen mittels des Touchscreens 21. Dabei kann die Reihenfolge der Routen von Sponsoren gegen Bezahlung bestimmter Gebühren beeinflusst werden.

Unter bestimmten Umständen kann auch eine automatische oder zumindest eine interaktivautomatische Zielauswahl vorgesehen sein. So kann vorgesehen sein, dass das Kraftfahrzeug 2 Betriebsinformationen des Kraftfahrzeuges 2 (mittels der drahtlosen Kommunikationsverbindung 7) sendet bzw. (mittels der drahtlosen Kommunikationsverbindung 7) an das offboard-Navigationssystem 10 überträgt. Eine Betriebsinformation des Kraftfahrzeuges in diesem Sinne kann z.B. der Status der Tankfüllung, der Ölstand, oder eine Information über einen Defekt sein. Wird z.B. übertragen, dass der Tank fast leer ist, so wird eine Navigation zur nächsten Tankstelle angeboten und/oder vorgesehen. Wird z.B. übertragen, dass ein bestimmter Defekt vorliegt, so wird eine Navigation zur nächsten (geeigneten) Servicestation angeboten und/oder vorgesehen.

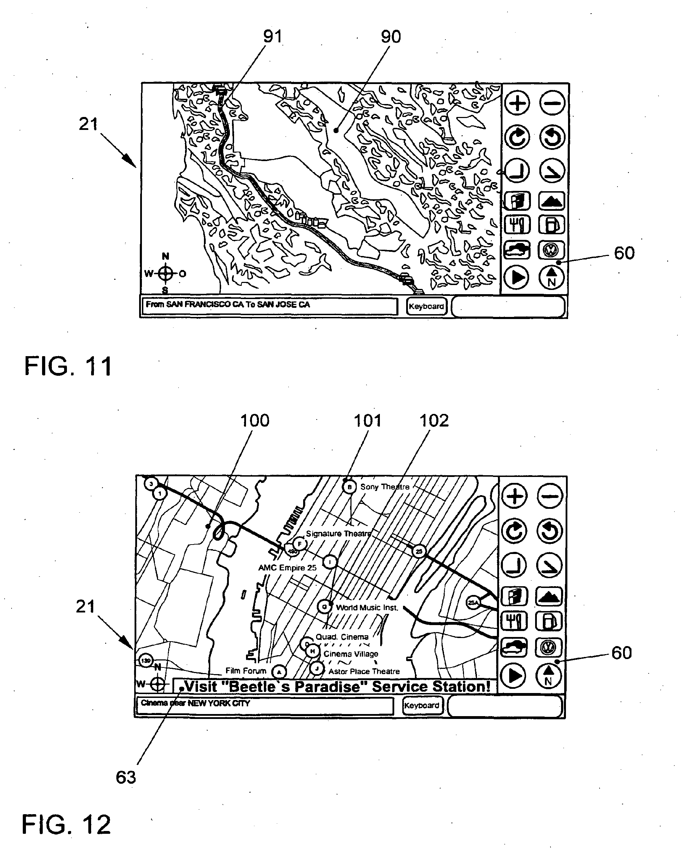

Fig. 11 zeigt ein Ausführungsbeispiel einer Anzeige einer Routenübersicht mittels des Touchscreens 21. Dabei bezeichnet Bezugszeichen 90 ein Satellitenbild und Bezugszeichen 91 einen Routenvorschlag. Die Routenübersicht kann auch, insbesondere aus der Vogelperspektive, in einem Fly-Through-Modus erfolgen.

Satellitenbilder 100 können - wie beispielhaft in Fig. 12 dargestellt - auch durch zusätzliche Informationen 101 und 102, wie z.B. Straßen, Straßennamen bzw. -bezeichnungen, Gebäude, Fahrzeuge, Verkehrsinformationen, (ggf. customized) POIs, call-out-boxes, Raststätten etc. überlagert bzw. ergänzt werden. Besondere Hinweise auf Raststätten oder Parkplätze können z.B. dann vorgesehen werden, wenn eine bestimmte Lenkdauer überschritten worden ist. Dabei kann vorgesehen sein, dass die Darstellung dieser zusätzlichen Informationen 101 und 102 in Abhängigkeit von Sponsoren- bzw. Werbegeldem erfolgt. Wird die zusätzliche Information 101 z.B. gesponsert, die zusätzliche Information 102 dagegen nicht, so erfolgt die Darstellung der zusätzlichen Information 101 z.B. in rot während die Darstellung der zusätzlichen Information 102 z.B. in grau erfolgt. Darüber hinaus kann hinter dem Symbol der gesponserten zusätzlichen Information 101 ein Menü oder ein Pop-Up-Fenster mit zusätzlichen Informationen hinterlegt sein, das aufgerufen wird, wenn ein Bediener den Touchscreen 21 in der Umgebung der zusätzlichen Information 101 berührt.

Es kann auch eine follow-me-Funktion vorgesehen sein, bei der die Position eines ausgewählten anderen Kraftfahrzeuges auf einer Karte, einem Satellitenbild und/oder einer 3D-Graphik, insbesondere zusammen mit der Position des Kraftfahrzeuges 2, dargestellt wird. Darüber hinaus kann ein Routenvorschlag dargestellt werden.

### Bezugszeichenliste

- 1: Navigationsanordnung
- 2: Kraftfahrzeug
- 3: Satellit
- 7: Kommunikationsverbindung
- 10: off-board-Navigationssystem
- 11, 12, 14: Knoten
- 15: Internet
- 16: Terminal
- 20: Anzeigesteuerung
- 21: Touchscreen
- 22: Schnittstelle
- 23: on-board-Navigationssystem
- 24: Infotainmentsystem
- 25: Telefon
- 26: Klimaautomatik
- 27: on-board-Sensorik
- 28: Speicher
- 30: Ortungssystem
- 35: Bussystem
- 40, 41, 42, 43, 51, 53, 54, 55: Schritt
- 50, 52, 56, 57: Abfrage
- 60: Bedienleiste
- 61A: Draufsicht-Darstellung
- 61B, 80: Vogelperspektiven-Darstellung
- 62A, 62B, 81, 91: Routenvorschlag
- 63: Werbefeld
- 70: Starteingabefeld
- 71: Zieleingabefeld
- 72: Tastatur
- 75: Objekteingabefeld
- 76: Gebietseingabefeld
- 82: graphische Bestätigung
- 90, 100: Satellitenbild
- 101, 102: zusätzliche Informationen

## Patentansprüche

1. Navigationsanordnung (1) für ein Kraftfahrzeug (2), die Navigationsanordnung (1) umfassend:
ein räumlich von dem Kraftfahrzeug (2) getrenntes off-board-Navigationssystem (10);
eine drahtlose Kommunikationsverbindung (7) zwischen dem off-board-Navigationssystem (10) und dem Kraftfahrzeug (2) zur Übertragung eines Routenvorschlags (62A, 62B, 81, 91) für das Kraftfahrzeug (2) oder einer Kartendarstellung (61 A, 61 B, 80) von der Umgebung des Kraftfahrzeuges (2) von dem off-board-Navigationssystem (10) an das Kraftfahrzeug (2), wobei von dem Kraftfahrzeug (2) eine Information in Bezug auf die Position des Kraftfahrzeuges (2) an das off-board-Navigationssystem (10) übertragbar ist, und
eine in dem Kraftfahrzeug (2) angeordnete Mensch-Maschine-Schnittstelle zur Ausgabe des Routenvorschlags (62A, 62B, 81, 91) oder der Kartendarstellung (61 A, 61 B, 80) an einen Bediener des Kraftfahrzeuges (2) in Verbindung oder zusammen mit einer Zusatzinformation (101, 102), wobei die Bereitstellung der Zusatzinformation (101, 102) einem Dritten zugänglich ist,
**gekennzeichnet durch** Mittel, die eingerichtet sind, die Information in Bezug auf die Position des Kraftfahrzeuges (2) gegen Gebühr dem Dritten zugänglich zu machen.

2. Navigationsanordnung (1) nach Anspruch 1, wobei die drahtlose Kommunikationsverbindung (7) als drahtlose Internetverbindung ausgestaltet ist.

3. Navigationsanordnung (1) nach Anspruch 1, wobei die Darstellung der Zusatzinformation (101, 102) von der Position des Kraftfahrzeuges (2), der Zeit, einer Suchhistorie oder einer Kundenpräferenz abhängig ist.

4. Navigationsanordnung (1) nach Anspruch 1, wobei die Zusatzinformation (101, 102) als Text, Logo oder Bild darstellbar ist.

5. Navigationsanordnung (1) nach Anspruch 1, wobei die Zusatzinformation (101, 102) der Kartendarstellung (61 A, 61 B, 80) überlagert darstellbar ist.

6. Navigationsanordnung (1) nach Anspruch 1, wobei die Zusatzinformation (101, 102) akustisch ausgebbar ist.

7. Navigationsanordnung (1) für ein Kraftfahrzeug (2), die Navigationsanordnung (1) umfassend:
ein räumlich von dem Kraftfahrzeug (2) getrenntes off-board-Navigationssystem (10);
eine drahtlose Kommunikationsverbindung (7) zwischen dem off-board-Navigationssystem (10) und dem Kraftfahrzeug (2) zur Übertragung eines Routenvorschlags (62A, 62B, 81, 91) für das Kraftfahrzeug (2) oder einer Kartendarstellung (61 A, 61 B, 80) von der Umgebung des Kraftfahrzeuges (2) von dem off-board-Navigationssystem (10) an das Kraftfahrzeug (2), wobei von dem Kraftfahrzeug (2) eine Information in Bezug auf die Position des Kraftfahrzeuges (2) an das off-board-Navigationssystem (10) übertragbar ist; und
eine in dem Kraftfahrzeug (2) angeordnete Mensch-Maschine-Schnittstelle zur Ausgabe des Routenvorschlags (62A, 62B, 81, 91) oder der Kartendarstellung (61 A, 61 B, 80) an einen Bediener des Kraftfahrzeuges (2) in Verbindung oder zusammen mit einer kommerziellen Werbung,
**gekennzeichnet durch** Mittel, die eingerichtet sind die Information in Bezug auf die Position des Kraftfahrzeuges (2) gegen Gebühr einem Dritten zugänglich zu machen.

8. Navigationsanordnung (1) nach Anspruch 7, wobei die drahtlose Kommunikationsverbindung (7) als drahtlose Internetverbindung ausgestaltet ist.

9. Navigationsanordnung (1) nach Anspruch 7, wobei die Darstellung der kommerziellen Werbung von der Position des Kraftfahrzeuges (2), der Zeit, einer Suchhistorie oder einer Kundenpräferenz abhängig ist.

10. Navigationsanordnung (1) nach Anspruch 7, wobei die kommerzielle Werbung als Text, Logo oder Bild darstellbar ist.

11. Navigationsanordnung (1) nach Anspruch 7, wobei die kommerzielle Werbung der Kartendarstellung (61 A, 61 B, 80) überlagert darstellbar ist.

12. Navigationsanordnung (1) nach Anspruch 7, wobei die kommerzielle Werbung akustisch ausgebbar ist.

13. Verfahren zum Betrieb einer Navigationsanordnung (1) für ein Kraftfahrzeug (2), wobei die Navigationsanordnung (1) ein räumlich von dem Kraftfahrzeug (2) getrenntes off-board-Navigationssystem (10) umfasst; das Verfahren umfassend:
drahtloses Übertragen eines Routenvorschlags (62A, 62B, 81, 91) für das Kraftfahrzeug (2) oder einer Kartendarstellung (61 A, 61 B, 80) von der Umgebung des Kraftfahrzeuges (2) von dem off-board-Navigationssystem (10) an das Kraftfahrzeug (2) und Übertragen einer Information in Bezug auf die Position des Kraftfahrzeuges (2) von dem Kraftfahrzeug (2) an das off-board-Navigationssystem (10);
drahtloses Übertragen einer kommerziellen Werbung von dem off-board-Navigationssystem (10) an das Kraftfahrzeug (2); und
Ausgabe der kommerziellen Werbung an einen Bediener des Kraftfahrzeuges,
**dadurch gekennzeichnet, dass**
die Information in Bezug auf die Position des Kraftfahrzeuges (2) gegen Gebühr einem Dritten zugänglich gemacht wird.

14. Verfahren nach Anspruch 13, das Verfahren weiterhin umfassend:
Ausgabe des Routenvorschlags (62A, 62B, 81, 91) oder der Kartendarstellung (61 A, 61 B, 80) an einen Bediener des Kraftfahrzeuges (2).

15. Verfahren nach Anspruch 13, das Verfahren weiterhin umfassend:
Ausgabe des Routenvorschlags (62A, 62B, 81, 91) oder der Kartendarstellung (61 A, 61 B, 80) an einen Bediener des Kraftfahrzeuges (2) in Verbindung oder zusammen mit der kommerziellen Werbung.

16. Verfahren nach Anspruch 13, wobei die kommerzielle Werbung in Abhängigkeit der Position des Kraftfahrzeuges (2), der Zeit, einer Suchhistorie oder einer Kundenpräferenz dargestellt wird.

17. Verfahren nach Anspruch 13, wobei die kommerzielle Werbung als Text, Logo oder Bild dargestellt wird.

18. Verfahren nach Anspruch 13, wobei die kommerzielle Werbung der Kartendarstellung (61A, 61 B, 80) überlagert dargestellt wird.

19. Verfahren nach Anspruch 13, wobei die kommerzielle Werbung akustisch ausgegeben wird.

20. Verfahren nach Anspruch 13, wobei mittels der kommerziellen Werbung erzielte Einnahmen zumindest zum Teil dem Hersteller des Kraftfahrzeuges zufließen.

21. Verfahren nach Anspruch 13, wobei mittels der kommerziellen Werbung erzielte Einnahmen zwischen dem Hersteller des Kraftfahrzeuges, einem Provider einer drahtlosen Internetverbindung, mittels der der Routenvorschlag (62A, 62B, 81, 91) für das Kraftfahrzeug (2) oder die Kartendarstellung (61 A, 61 B, 80) von der Umgebung des Kraftfahrzeuges (2) von dem off-board-Navigationssystem (10) an das Kraftfahrzeug (2) übertragen wird, und einem Provider der Kartendarstellung (61 A, 61 B, 80) geteilt wird.

22. Verfahren nach Anspruch 13, wobei dem Benutzer des Kraftfahrzeuges (2) mittels der kommerziellen Werbung ein Rabatt gewährt oder in Aussicht gestellt wird.

23. Verfahren nach Anspruch 13, wobei dem Benutzer des Kraftfahrzeuges (2) mittels der kommerziellen Werbung ein garantierter Parkplatz gewährt oder in Aussicht gestellt wird.

24. Verfahren nach Anspruch 13, wobei mittels der kommerziellen Werbung erzielte Einnahmen zumindest zum Teil dem Ausbau oder der Pflege der Navigationsanordnung (1) zufließen.

25. Verfahren nach Anspruch 13, wobei die Kosten für eine Infrastruktur zum drahtlosen Übertragen des Routenvorschlags (62A, 62B, 81, 91) oder der Kartendarstellung (61 A, 61 B, 80) von dem off-board-Navigationssystem (10) an das Kraftfahrzeug (2) zumindest für einen Streckenabschnitt zumindest zum Teil von zumindest einem Sponsor getragen werden.

26. Verfahren nach Anspruch 13, wobei eine Notfallinformation von dem off-board-Navigationssystem (10) an das Kraftfahrzeug (2) mit einer größeren Bandbreite als die kommerzielle Werbung übertragen wird.

27. Verfahren nach Anspruch 13, wobei einem Nutzer eines Kraftfahrzeuges (2) gegen eine Gebühr bestimmte Optionen angeboten werden.

28. Verfahren nach Anspruch 13, wobei die Information in Bezug auf eine erwartete Ankunftszeit an einem Zielpunkt gegen eine Gebühr einem Dritten zugänglich gemacht wird.

29. Verfahren nach Anspruch 13, wobei Routen von Kraftfahrzeugen (2) aufgezeichnet werden.

30. Kraftfahrzeug, das Kraftfahrzeug umfassend:
ein Navigationssystem (23) zur Ermittlung eines Routenvorschlags (62A, 62B, 81, 91) für das Kraftfahrzeug (2);
eine dem Navigationssystem (10, 23) zugeordnete Mensch-Maschine-Schnittstelle zur Ausgabe des Routenvorschlags (62A, 62B, 81, 91) für das Kraftfahrzeug (2) oder einer Kartendarstellung (61 A, 61 B, 80) von der Umgebung des Kraftfahrzeuges (2), wobei vom Kraftfahrzeug eine Information in Bezug auf die Position des Kraftfahrzeuges (2) an das Navigationssystem (23) übertragbar ist; und
eine drahtlose Internetschnittstelle (22) zum Empfangen einer kommerziellen Werbung, wobei die kommerzielle Werbung in Verbindung oder zusammen mit dem Routenvorschlag (62A, 62B, 81, 91) oder der Kartendarstellung (61 A, 61 B, 80) an einen Bediener des Kraftfahrzeuges (2) ausgebbar ist,
**gekennzeichnet durch** Mittel, mit denen
die Information in Bezug auf die Position des Kraftfahrzeuges (2) gegen Gebühr einem Dritten zugänglich machbar ist.

## Claims

1. Navigation arrangement (1) for a motor, vehicle (2), the navigation arrangement (1) comprising:
an off-board navigation system (10) that is physically separate from the motor vehicle (2);
a wireless communication link (7) between the off-board navigation system (10) and the motor vehicle (2) for transmitting a route proposal (62A, 62B, 81, 91) for the motor vehicle (2) or a map presentation (61A, 61B, 80) of the surroundings of the motor vehicle (2) from the off-board navigation system (10) to the motor vehicle (2), wherein the motor vehicle (2) can transmit a piece of information relating to the position of the motor vehicle (2) to the off-board navigation system (10), and
a man/machine interface, arranged in the motor vehicle (2), for outputting the route proposal (62A, 62B, 81, 91) or the map presentation (61A, 61B, 80) to an operator of the motor vehicle (2) in conjunction or together with a piece of supplementary information (101, 102), wherein the provision of the supplementary information (101, 102) is accessible to a third party, **characterized by** means that are set up to make the information relating to the position of the motor vehicle (2) accessible to the third party for a fee.

2. Navigation arrangement (1) according to Claim 1, wherein the wireless communication link (7) is embodied as a wireless internet connection.

3. Navigation arrangement (1) according to Claim 1, wherein the presentation of the supplementary information (101, 102) is dependent on the position of the motor vehicle (2), the time, a search history or a customer preference.

4. Navigation arrangement (1) according to Claim 1, wherein the supplementary information (101, 102) can be presented as a text, logo or image.

5. Navigation arrangement (1) according to Claim 1, wherein the supplementary information (101, 102) can be presented in a manner overlaid on the map presentation (61A, 61B, 80).

6. Navigation arrangement (1) according to Claim 1, wherein the supplementary information (101, 102) can be output in audible form.

7. Navigation arrangement (1) for a motor vehicle (2), the navigation arrangement (1) comprising:
an off-board navigation system (10) that is physically separate from the motor vehicle (2);
a wireless communication link (7) between the off-board navigation system (10) and the motor vehicle (2) for transmitting a route proposal (62A, 62B, 81, 91) for the motor vehicle (2) or a map presentation (61A, 61B, 80) of the surroundings of the motor vehicle (2) from the off-board navigation system (10) to the motor vehicle (2), wherein the motor vehicle (2) can transmit a piece of information relating to the position of the motor vehicle (2) to the off-board navigation system (10); and
a man/machine interface, arranged in the motor vehicle (2), for outputting the route proposal (62A, 62B, 81, 91) or the map presentation (61A, 61B, 80) to an operator of the motor vehicle (2) in conjunction or together with a commercial advertisement,
**characterized by** means that are set up to make the information relating to the position of the motor vehicle (2) accessible to a third party for a fee.

8. Navigation arrangement (1) according to Claim 7, wherein the wireless communication link (7) is embodied as a wireless internet connection.

9. Navigation arrangement (1) according to Claim 7, wherein the presentation of the commercial advertisement is dependent on the position of the motor vehicle (2), the time, a search history or a customer preference.

10. Navigation arrangement (1) according to Claim 7, wherein the commercial advertisement can be presented as a text, logo or image.

11. Navigation arrangement (1) according to Claim 7, wherein the commercial advertisement can be presented in a manner overlaid on the map presentation (61A, 61B, 80).

12. Navigation arrangement (1) according to Claim 7, wherein the commercial advertisement can be output in audible form.

13. Method for operating a navigation arrangement (1) for a motor vehicle (2), wherein the navigation arrangement (1) comprises an off-board navigation system (10) that is physically separate from the motor vehicle (2); the method comprising:
wireless transmission of a route proposal (62A, 62B, 81, 91) for the motor vehicle (2) or of a map presentation (61A, 61B, 80) of the surroundings of the motor vehicle (2) from the off-board navigation system (10) to the motor vehicle (2) and transmission of a piece of information relating to the position of the motor vehicle (2) from the motor vehicle (2) to the off-board navigation system (10);
wireless transmission of a commercial advertisement from the off-board navigation system (10) to the motor vehicle (2); and
output of the commercial advertisement to an operator of the motor vehicle,
**characterized in that**
the information relating to the position of the motor vehicle (2) is made accessible to a third party for a fee.

14. Method according to Claim 13, the method also comprising:
output of the route proposal (62A, 62B, 81, 91) or of the map presentation (61A, 61B, 80) to an operator of the motor vehicle (2).

15. Method according to Claim 13, the method also comprising:
output of the route proposal (62A, 62B, 81, 91) or of the map presentation (61A, 61B, 80) to an operator of the motor vehicle (2) in conjunction or together with the commercial advertisement.

16. Method according to Claim 13, wherein the commercial advertisement is presented on the basis of the position of the motor vehicle (2), the time, a search history or a customer preference.

17. Method according to Claim 13, wherein the commercial advertisement is presented as a text, logo or image.

18. Method according to Claim 13, wherein the commercial advertisement is presented in a manner overlaid on the map presentation (61A, 61B, 80).

19. Method according to Claim 13, wherein the commercial advertisement is output in audible form.

20. Method according to Claim 13, wherein proceeds from the commercial advertisement accrue at least to some extent for the manufacturer of the motor vehicle.

21. Method according to Claim 13, wherein proceeds from the commercial advertisement are shared between the manufacturer of the motor vehicle, a provider of a wireless internet connection by means of which the route proposal (62A, 62B, 81, 91) for the motor vehicle (2) or the map presentation (61A, 61B, 80) of the surroundings of the motor vehicle (2) is transmitted from the off-board navigation system (10) to the motor vehicle (2), and a provider of the map presentation (61A, 61B, 80).

22. Method according to Claim 13, wherein the user of the motor vehicle (2) is granted or provided with the prospect of a discount by means of the commercial advertisement.

23. Method according to Claim 13, wherein the user of the motor vehicle (2) is granted or provided with the prospect of a guaranteed parking space by means of the commercial advertisement.

24. Method according to Claim 13, wherein proceeds from the commercial advertisement accrue at least to some extent for the expansion or maintenance of the navigation arrangement (1).

25. Method according to Claim 13, wherein the costs of an infrastructure for wirelessly transmitting the route proposal (62A, 62B, 81, 91) or the map presentation (61A, 61B, 80) from the off-board navigation system (10) to the motor vehicle (2) are borne, at least for a section of the route, at least to some extent by at least one sponsor.

26. Method according to Claim 13, wherein a piece of emergency information is transmitted from the off-board navigation system (10) to the motor vehicle (2) with a larger bandwidth than the commercial advertisement.

27. Method according to Claim 13, wherein a user of a motor vehicle (2) is provided with particular options for a fee.

28. Method according to Claim 13, wherein the information relating to an expected time of arrival at a destination is made accessible to a third party for a fee.

29. Method according to Claim 13, wherein routes are recorded by motor vehicles (2).

30. Motor vehicle, the motor vehicle comprising:
a navigation system (23) for ascertaining a route proposal (62A, 62B, 81, 91) for the motor vehicle (2);
a man/machine interface, associated with the navigation system (10, 23), for outputting the route proposal (62A, 62B, 81, 91) for the motor vehicle (2) or a map presentation (61A, 61B, 80) of the surroundings of the motor vehicle (2), wherein the motor vehicle can transmit a piece of information relating to the position of the motor vehicle (2) to the navigation system (23); and
a wireless internet interface (22) for receiving a commercial advertisement, wherein the commercial advertisement can be output to an operator of the motor vehicle (2) in conjunction or together with the route proposal (62A, 62B, 81, 91) or the map presentation (61A, 61B, 80),
**characterized by** means that can be used to make the information relating to the position of the motor vehicle (2) accessible to a third party for a fee.

## Revendications

1. Ensemble de navigation (1) pour véhicule automobile (2), l'ensemble de navigation (1) comprenant :
un système non embarqué de navigation (10) séparé spatialement du véhicule automobile (2),
une liaison (7) de communication sans fil entre le système non embarqué de navigation (10) et le véhicule automobile (2), qui transmet une proposition d'itinéraire (62A, 62B, 81, 91) pour le véhicule automobile (2) ou la représentation (61A, 61B, 80) d'une carte de l'environnement du véhicule automobile (2) depuis le système non embarqué de navigation (10) jusqu'au véhicule automobile (2), une information concernant la position du véhicule automobile (2) pouvant être transmise au système non embarqué de navigation (10) par le véhicule automobile (2),
une interface homme-machine disposée dans le véhicule automobile (2) et présentant la proposition d'itinéraire (62A, 62B, 81, 91) ou la représentation (61A, 61B, 80) de la carte à un opérateur du véhicule automobile (2) en association ou en même temps qu'une information supplémentaire (101, 102), la délivrance de l'information supplémentaire (101, 102) étant accessible à un tiers,
**caractérisé par**
des moyens conçus pour rendre l'information concernant la position du véhicule automobile (2) accessible au tiers contre paiement.

2. Ensemble de navigation (1) selon la revendication 1, dans lequel la liaison (7) de communication sans fil est configurée comme liaison internet sans fil.

3. Ensemble de navigation (1) selon la revendication 1, dans lequel la présentation des informations supplémentaires (101, 102) dépend de la position du véhicule automobile (2), de l'heure, d'un historique de recherche ou d'une préférence du client.

4. Ensemble de navigation (1) selon la revendication 1, dans lequel les informations supplémentaires (101, 102) peuvent être présentées sous la forme de texte, de logo ou d'image.

5. Ensemble de navigation (1) selon la revendication 1, dans lequel les informations supplémentaires (101, 102) peuvent être présentées en superposition à la représentation (61A, 61B, 80) de la carte.

6. Ensemble de navigation (1) selon la revendication 1, dans lequel les informations supplémentaires (101, 102) peuvent être délivrées acoustiquement.

7. Ensemble de navigation (1) pour véhicule automobile (2), l'ensemble de navigation (1) comprenant :
un système non embarqué de navigation (10) séparé spatialement du véhicule automobile (2),
une liaison (7) de communication sans fil entre le système non embarqué de navigation (10) et le véhicule automobile (2), qui transmet une proposition d'itinéraire (62A, 62B, 81, 91) pour le véhicule automobile (2) ou la représentation (61A, 61B, 80) d'une carte de l'environnement du véhicule automobile (2) depuis le système non embarqué de navigation (10) jusqu'au véhicule automobile (2), une information concernant la position du véhicule automobile (2) pouvant être transmise au système non embarqué de navigation (10) par le véhicule automobile (2),
une interface homme-machine disposée dans le véhicule automobile (2) et présentant la proposition d'itinéraire (62A, 62B, 81, 91) ou la représentation (61A, 61B, 80) de la carte à un opérateur du véhicule automobile (2) en association ou en même temps qu'une publicité commerciale,
**caractérisé par**
des moyens conçus pour rendre l'information concernant la position du véhicule automobile (2) accessible à un tiers contre paiement.

8. Ensemble de navigation (1) selon la revendication 7, dans lequel la liaison (7) de communication sans fil est configurée comme liaison internet sans fil.

9. Ensemble de navigation (1) selon la revendication 7, dans lequel la présentation de la publicité commerciale dépend de la position du véhicule automobile (2), de l'heure, d'un historique de recherche ou d'une préférence du client.

10. Ensemble de navigation (1) selon la revendication 7, dans lequel la publicité commerciale peut être présentée sous la forme de texte, de logo ou d'image.

11. Ensemble de navigation (1) selon la revendication 7, dans lequel la publicité commerciale peut être présentée en superposition à la représentation (61A, 61B, 80) de la carte.

12. Ensemble de navigation (1) selon la revendication 7, dans lequel la publicité commerciale peut être délivrée acoustiquement.

13. Procédé de conduite d'un ensemble de navigation (1) pour un véhicule automobile (2), l'ensemble de navigation (1) comportant un système non embarqué de navigation (10) séparé spatialement du véhicule (2), le procédé comportant les étapes qui consistent à :
transmettre sans fil une proposition d'itinéraire (62A, 62B, 81, 91) pour le véhicule automobile (2) ou la représentation (61A, 61B, 80) d'une carte de l'environnement du véhicule automobile (2) depuis le système non embarqué de navigation (10) jusqu'au véhicule automobile (2), une information concernant la position du véhicule automobile (2) pouvant être transmise au système non embarqué de navigation (10) par le véhicule automobile (2),
faire transmettre sans fil une publicité commerciale par le système non embarqué de navigation (10) au véhicule automobile (2) et
présenter la publicité commerciale à un opérateur du véhicule automobile,
**caractérisé en ce que**
l'information concernant la position du véhicule automobile (2) est rendue accessible à un tiers contre paiement.

14. Procédé selon la revendication 13, le procédé comportant en outre l'étape qui consiste à :
présenter la proposition d'itinéraire (62A, 62B, 81, 91) ou la représentation (61A, 61B, 80) de la carte à un opérateur du véhicule automobile (2).

15. Procédé selon la revendication 13, le procédé comportant en outre l'étape qui consiste à :
présenter la proposition d'itinéraire (62A, 62B, 81, 91) ou la représentation (61A, 61B, 80) de la carte à un opérateur du véhicule automobile (2) en association ou en même temps qu'une publicité commerciale.

16. Procédé selon la revendication 13, dans lequel la publicité commerciale est présentée en fonction de la position du véhicule automobile (2), de l'heure, d'un historique de recherche ou d'une préférence du client.

17. Procédé selon la revendication 13, dans lequel la publicité commerciale est présentée sous la forme de texte, de logo ou d'image.

18. Procédé selon la revendication 13, dans.lequel la publicité commerciale est présentée en superposition avec la présentation (61A, 61B, 80) de la carte.

19. Procédé selon la revendication 13, dans lequel la publicité commerciale est présentée acoustiquement.

20. Procédé selon la revendication 13, dans lequel les recettes obtenues grâce à la publicité commerciale sont au moins en partie transmises au fabricant du véhicule automobile.

21. Procédé selon la revendication 13, dans lequel les recettes obtenues grâce à la publicité commerciale sont réparties entre le fabricant du véhicule automobile, le fournisseur d'accès internet sans fil au moyen duquel la proposition d'itinéraire (62A, 62B, 81, 91) pour le véhicule automobile (2) ou la représentation (61A, 61B, 80) de la carte de l'environnement du véhicule automobile (2) est transmise depuis le système non embarqué de navigation (10) au véhicule automobile (2) et le fournisseur de la présentation (61A, 61B, 80) de la carte.

22. Procédé selon la revendication 13, dans lequel une remise est accordée ou proposée à l'utilisateur du véhicule automobile (2) au moyen de la publicité commerciale.

23. Procédé selon la revendication 13, dans lequel un emplacement de stationnement garanti est accordé ou proposé à l'utilisateur du véhicule automobile (2) au moyen de la publicité commerciale.

24. Procédé selon la revendication 13, dans lequel les recettes obtenues au moyen de la publicité commerciale aboutissent au moins en partie à l'établissement ou à la maintenance de l'ensemble de navigation (1).

25. Procédé selon la revendication 13, dans lequel les coûts d'infrastructure pour le transfert sans fil de la proposition d'itinéraire (62A, 62B, 81, 91) ou de la représentation (61A, 61B, 80) de la carte par le système non embarqué de navigation (10) au véhicule automobile (2) sont supportés au moins en partie par au moins un sponsor au moins sur une section du parcours.

26. Procédé selon la revendication 13, dans lequel des informations d'urgence sont transmises par le système non embarqué de navigation (10) au véhicule automobile (2) à une largeur de bande plus grande que la publicité commerciale.

27. Procédé selon la revendication 13, dans lequel certaines options sont proposées moyennant paiement à l'utilisateur du véhicule automobile (2).

28. Procédé selon la revendication 13, dans lequel les informations concernant l'heure attendue d'arrivée à une destination sont rendues accessibles à un tiers moyennant paiement.

29. Procédé selon la revendication 13, dans lequel les itinéraires de véhicules automobiles (2) sont affichés.

30. Véhicule automobile, le véhicule automobile comprenant :
un système de navigation (23) permettant de déterminer une proposition d'itinéraire (62A, 62B, 81, 91) à un véhicule (2),
une interface homme-machine associée au système de navigation (10, 23) et transmettant la proposition d'itinéraire (62A, 62B, 81, 91) pour le véhicule automobile (2) ou la représentation (61A, 61B, 80) d'une carte de l'environnement du véhicule automobile (2), une information concernant la position du véhicule automobile (2) pouvant être transmise au système de navigation (23) par le véhicule automobile,
une interface internet sans fil (22) qui reçoit une publicité commerciale, la publicité commerciale pouvant être présentée à un opérateur du véhicule automobile (2) en association ou en même temps que la proposition d'itinéraire (62A, 62B, 81, 91) ou que la représentation (61A, 61B, 80) de la carte,
**caractérisé par**
des moyens par lesquels l'information concernant la position du véhicule automobile (2) peut être rendue accessible à un tiers contre paiement.
